# EUROPÄISCHE PATENTSCHRIFT

(11) **EP 1 224 244 B1**
(45) Veröffentlichungstag und Bekanntmachung des Hinweises auf die Patenterteilung: **12.11.2003**
(21) Anmeldenummer: 00966017.6
(22) Anmeldetag: 15.09.2000
(51) Int. Cl.: C09D 175/06, C08L 75/06, C08G 18/61, C08G 18/80

(54) **BESCHICHTUNGSMITTEL FÜR ELASTOMERE**
COATING MEANS FOR ELASTOMERS
SUBSTANCE DE REVETEMENT POUR ELASTOMERES

(30) Priorität: 24.09.1999 DE 19945848
(43) Veröffentlichungstag der Anmeldung: 24.07.2002
(73) Patentinhaber: Henkel Kommanditgesellschaft auf Aktien, 40589 Düsseldorf (DE)
(72) Erfinder: WEFRINGHAUS, Rainer, 40723 Hilden (DE); HEMEL, Richard, 40789 Monheim (DE)
(86) Internationale Anmeldenummer: EP0009010
(87) Internationale Veröffentlichungsnummer: WO01023482

(56) Entgegenhaltungen:
- EP-A- 0 669 352
- US-A- 4 945 123
- US-A- 5 702 754
- DATABASE WPI Section Ch, Week 199344 Derwent Publications Ltd., London, GB; Class A25, AN 1993-348607 XP002157985 & JP 05 255587 A (KANSAI PAINT CO LTD), 5. Oktober 1993 (1993-10-05)

## Beschreibung

Die vorliegende Erfindung betrifft ein wässriges Beschichtungsmittel für Elastomere, das als reibungsvermindernder Überzug auf elastomeren Formkörpern geeignet ist. Insbesondere bezieht sich die Erfindung auf wässrige Polyurethan-Zusammensetzungen, die nach dem Aufbringen auf übliche Dichtungs- Profile aus Elastomeren einen niedrigen Reibbeiwert bewirken.

Für eine Vielzahl von technischen Anwendungen, insbesondere für die Abdichtung von Fensterschächten für bewegliche Glasteile sowie für Glas-Laufschienen für Glasfenster bei Fahrzeugen, insbesondere Motorfahrzeugen, werden Elastomere benötigt, die eine Vielzahl von Anforderungen erfüllen müssen. Sie müssen eine hohe Wärmefestigkeit und Wetterbeständigkeit unter den unterschiedlichsten Klimabedingungen aufweisen. Die Oberfläche dieser Elastomeren muß, besonders bei der Halterung und Führung von beweglichen Glasfenstern, einen sehr niedrigen Reibungskoeffizient (Reibbeiwert) aufweisen, damit das leichte Öffnen und Schließen der beweglichen Fenster ermöglicht wird. Üblicherweise werden die Elastomerteile an den Oberflächen, auf denen das bewegliche Glas gleitet mit einem Film beschichtet, der eine verbesserte Gleitfähigkeit als das unbeschichtete Elastomer gegenüber dem Glas aufweist. Zur Verbesserung der Gleitfähigkeit dieser Beschichtung sind die verschiedensten Verfahren bekanntgeworden.

In der DE-A-3335150 wird eine Polyurethanbeschichtung vorgeschlagen, die in das Bindemittel Kugeln oder andere Partikel eingebettet hat, die größer als die Schichtdicke des Bindemittels sind. Als derartige "Abstandshalter" kommen Teilchen aus Glas, Aluminium, Polypropylen oder Polyvinylchlorid in Betracht. Ein prinzipieller Nachteil bei dieser Vorgehensweise besteht darin, daß die Berg- und Tal-Struktur des Abstandshalter enthaltenen Lacks keine optinale Abdichtung bewirkt, so daß Fahrtwind eindringen kann, durch den Geräusche verursacht werden, die nicht erwünscht sind. Weiterhin wird als Nachteil empfunden, daß die Oberfläche der so lackierten Elastomerteile keine optisch glatte glänzende Oberfläche bildet, sondern wie feiner Schmirgelleinen aussieht.

Ein weiteres, in der US-A-4572872 und US-A-4572871 beschriebenes Verfahren besteht darin, dem Gleitlack Silikone oder Fluorharze beizumengen. Derartige Lacke haben den Nachteil, daß sie unter extremen Wittungsbedingungen, wie Hitze, Kälte, Wind und Nässe, denen das Elastomerteil üblicherweise ausgesetzt ist, an den beigemengten Silikonen und Fluorharzen verarmen, was zu einer Verminderung der Gleitfähigkeit des Elastomerteils gegenüber Glas führt und daher unerwünscht ist. Desweiteren wird als Nachteil empfunden, daß es sich bei den Silikonen um Öle handelt, von denen bekannt ist, daß sie als Trennmittel wirken. Derartige Trennmittel werden aufgrund ihrer charakteristischen Stoffeigenschaften relativ leicht verschleppt und können beispielsweise in der Montage, etwa beim Verkleben und beim Lackieren von Karosserieteilen, zu Schwierigkeiten führen. Der Einsatz und Gebrauch von nicht festgebundenen Silikonölen ist daher von den Automobilherstellem nicht erwünscht.

Die DE-A-3503479 schlägt zur reibungsvernindemden Filmbeschichtung eine Anstrichmasse vor, die ein Polyurethanprepolymer, erhalten durch Umsetzung eines Polyesterpolyols mit terminalen Hydroxylgruppen mit einem organischen Diisocyanat mit einem Molverhältnis von NCOIOH von 0,6/1 bis 0,95/1 sowie ein Ricinusölpolyol und ein Urethan-Prepolymer mit terminalen Isocyanatgruppen. Desweiteren soll diese Anstrichmasse ein Fluorkohlenstoffharz enthalten und ein flüssiges Silikonöl sowie eine untergeordnete Menge an Füllstoffen und/oder Pigmenten. Die Beschichtungsmasse wird dabei in Form einer Lösung der Bindemittelkomponenten in einem organischen Lösungsmittel eingesetzt. Es werden keine Angaben darüber gemacht, ob dieses Bindemittelsystem als einkomponentiges oder mehrkomponentiges System für den Anwender konfektioniert werden kann.

In der EP-A-655488 wird eine Urethan-Harz-basierende Beschichtungsmasse zur Reibungsverminderung vorgeschlagen, die einen Polyurethanlack beschreibt, enthaltend ein Polyol und einen Isocyanathärter sowie ein polymeres Pulver aus 11-Nylon und/oder 12-Nylon mit einem Schmelzpunkt unterhalb der Vulkanisationstemperatur und einem Löslichkeitsparameter, der mindestens um 0,5 größer ist als der Löslichkeitsparameter des Urethanlacks. Das polymere Pulver soll dabei einen durchschnittlichen Durchmesser im Bereich zwischen 5 und 500 µm haben. Auch diese Schrift macht keine Aussagen darüber, ob derartige Beschichtungszusammensetzungen als lagerstabile einkomponentige Formulierung darstellbar ist.

Die US-A-5558741 beschreibt eine Methode zur Herstellung eines Fensterdichtungs-Profils bei der das elastomere Dichtprofil extrudiert wird, anschließend wird die Oberfläche des elastromeren Dichtprofils für 0,5 bis 60 Sekunden mit einer UV-Strahlung von etwa 0,2 bis 40 Joule bestrahlt. Danach wird die so bestrahlte Oberfläche mit einer reibungsvermindernden Beschichtung bestehend aus einem Harzbindemittel und einem Schmiermittel-Pigment beschichtet. Als vorzugsweise zu verwendende Gleitmittel werden Fluorkohlenwasserstoffpolymere wie PTFE oder Silikonschmiermittel genannt. Über die Bindemittel werden keine näheren Angaben gemacht, es wird nur gesagt daß diese von der Firma Acheson Industries Inc. unter dem Handelsnamen "EMRALON" erhältlich sind.

Die DE-A-19608057 beschreibt einen mit Wasser verdünnbaren Dichtungsstreifen-Überzug, umfassend ein 2- oder 3-Komponenten-System, enthaltend eine Silikon-Emmulsions-Grundlage, ein die Bad-Lebensdauer verlängerndes Mittel auf der Basis einer Polyurethan-Dispersion sowie eine Vernetzer-Zusammensetzung auf der Basis eines silikon- oder nicht silikonartigen organischen Epoxidharzes, das vorzugsweise weiterhin ein organisches Lösungsmittel enthält.

Die DE-A-19520278 offenbart 1- oder 2-Komponenten-Urethanlacke zur Beschichtung von Elastomeren, enthaltend Polyurethanprepolymere mit im Mittel zwei oder mehr Isocyanatgruppen pro Molekül, die durch Vermischen von Alkoholen der Funktionalität 2 oder größer mit einem Überschuß an lsocyanat-Verbindungen der Funktionalität 2 und größer und Lösungsmittel hergestellt werden und zur Gleitverbesserung eine extrem hohe Menge einer Eisenoxidhaltigen Verbindung enthalten.

Gegenstand der EP-A-0375923 sind feuchtigkeitshärtende Ein-Komponenten-Polyurethanlacke zur Beschichtung von Elastomeren, enthaltend Polyurethanprepolymere mit im Mittel 2 oder mehr Isocyanatgruppen pro Molekül, hergestellt durch Vermischen von Alkoholen der Funktionalität 2 und größer mit einem Überschuß an Isocyanatverbindungen der Funktionalität 2 und größer und Lösungsmitteln, wobei zur Gleitverbesserung reaktive Polysiloxane und reaktive Tenside eingesetzt werden, wobei die Tenside Verbindungen mit einem perfluorierten Alkylrest, welcher 6 bis 12 C-Atome enthält, und einer nichtfluorierten hydrophilen Gruppe mit einer gegenüber Isocyanat-terminierten Lackbestandteilen reaktiven Gruppe sind. Derartige Lacke können vorzugsweise weitere Hilfsstoffe wie beispielsweise Verzögerer, Beschleuniger, Stabilisatoren und Pigmente enthalten. Derartige Filme können allerdings nur in sehr dünnen Schichten aufgetragen werden.

Der vorliegenden Erfindung liegt die Aufgabe zugrunde, einkomponentige wässrige Beschichtungsmittet zur Beschichtung von Elastomeren bereitzustellen, die es erlauben, eine einwandfreie Lackierung des Elastomerteils zu erzielen und dabei gleichzeitig einen sehr niedrigen Reibbeiwert zu bewirken. Außerdem sollten die Abbriebbeständigkeit dieser Beschichtungen und die Medienbeständigkeit gegenüber dem Stand der Technik verbessert werden.

Die Lösung der Aufgabe ist den Patentansprüchen zu entnehmen, sie besteht im Wesentlichen in der Bereitstellung einer geeigneten Polyurethan-Lackzusammensetzung, die ein wirksames Mittel zur Verbesserung des Gleitverhaltens enthält.

Gegenstand der vorliegenden Erfindung sind daher wässrige, einkomponentige Polyurethanlack-Zusammensetzungen zur Beschichtung von Elastomeren, die mindestens eine wässrige Polyurethandispersion, eine Verbindung mit blockierten Isocyanatgruppen, ein Mittel zur Verbesserung des Gleitverhaltens (Reibbeiwertes bzw. Reibungskoeffizienten), mindestens ein Netz- und Verlaufsmittel sowie gegebenenfalls übliche Haftvermittler, Farbstoffe und/oder Pigmente enthalten.

Ein weiterer Gegenstand der Erfindung ist ein Verfahren zur Verbesserung der Gleitfähigkeit von Elastomeroberflächen gekennzeichnet durch die folgenden wesentlichen Verfahrensschritte:
- Reinigen der Elastomeroberfläche, falls erforderlich,
- Aufbringen einer Haftvermittlerschicht auf die Elastomeroberfläche, falls erforderlich,
- Beschichten der Elastomeroberfläche mit einer Zusammensetzung enthaltend mindestens eine wässrige Polyurethandispersion, eine Verbindung mit blockierten Isocyanatgruppen, ein Mittel zur Verbesserung des Gleitverhaltens, mindestens ein Netz- und Verlaufsmittel sowie weitere Hilfs- und Zusatzstoffe, wobei die Beschichtung durch Tauchen der Elastomerteile oder durch Sprühauftrag erfolgt,
- Trocknen des Elastomerteils bei Temperaturen von 50°C bis 200°C, vorzugsweise bei 90°C bis 180°C für 0,5 bis 15 Minuten, wobei nach Abdampfen der flüchtigen Bestandteile das Bindemittelsystem durch chemische Reaktion vernetzt.

Ein weiterer Gegenstand der vorliegenden Erfindung ist die Verwendung derartig beschichteter Elastomerteile zur Abdichtung von Fensterschächten für bewegliche Glasteile und/oder als Dichtungsprofile im Automobilbau, beispielsweise als Dichtungsprofile für Türen, Kofferraumdeckel, Schiebedächer oder Motorhauben.

Als Polyurethan-Dispersionen können im Prinzip alle aliphatischen PU-Dispersionen eingesetzt werden, die auf der Basis von Polyestern oder Polycarbonaten und aliphatischen Polyisocyanaten aufgebaut sind. Dabei enthalten diese Polyurethan-Dispersionen Bindemittel, die im Wesentlichen keine freien Isocyanatgruppen mehr enthalten, sie können jedoch selbstvernetzende Gruppen enthalten. Besonders bevorzugt ist die Verwendung von Kombinationen von Polyurethan-Dispersionen auf der Basis von aliphatischen Polyisocyanaten und Polycarbonaten sowie auf der Basis von aliphatischen Polyisocyanaten und Polyestern. Diese Polyurethanbindemittel sind bekannt und gängige Handelprodukte, sie werden vorzugsweise für wasserbasierte Lackierungen eingesetzt.

Als Verbindung mit blockierten Isocyanatgruppen können alle an sich bekannten vorzugsweise aliphatischen Polyisocyanat-Derivate mit blockierten lsocyanatgruppen eingesetzt werden.

Konkrete Beispiele für derartige blockierte Polyisocyanat-Derivate sind Reaktionsprodukte von niedermolekularen Diolen und/oder Triolen wie beispielsweise Ethylenglycol, Propylenglycol, Butandiol, Trimethylolpropan, Glycerin und dergleichen mit einem stöchiometrischen Überschuß von Diisocyanaten wie, 4,4'-Dicyclohexylmethandiisocyanat (H₁₂MDI), 1-lsocyanatomethyl-3-lsocyanato-1,5,5-Trimethyl-cyclohexan (Isophoron-diisocyanat, IPDI), Cyclohexan-1,4-diisocyanat, hydriertes Xylylen-diisocyanat (H₆XDI), 1-Methyl-2,4-diisocyanato-cyclohexan, m- oder p-Tetramethylxylendiisocyanat (m-TMXDI, p-TMXDI), Dimerfettsäure-Diisocyanat, Tetramethoxybutan-1,4-diisocyanat, Butan-1,4-diisocyanat, Hexan-1,6-diisocyanat (HDI), 1,6-Diisocyanato-2,2,4-trimethylhexan, 1,6-Diisocyanato-2,4,4-trimethylhexan, Butan-1,4-diisocyanat sowie 1,12-Dodecandiisocyanat (C₁₂DI) mit anschließender Blockierung der freien Isocyanatgruppen. Eine andere Möglichkeit ist die Verwendung von Biuretisierungs- oder Isocyanuratisierungs-Produkten der vorgenannten Diisocyanate, gefolgt von der Blockierung der freien Isocyanatgruppen.

Die einzusetzenden Blockierungsmittel werden ausgewählt aus Aldoximen, Ketoximen, Lactamen, Imidazolverbindungen, β-Dicarbonylverbindungen wie z.B. Malonsäure-dialkylester oder Acetessigester. Weitere an sich bekannte Blockierungsmittel können Alkohole, Phenole, insbesondere Alkylphenole, Thioalkohole, Thiophenole, sekundäre Amine, Amide, Imide oder Hydroxamsäureester sein. Diese Blockierungsgruppen werden dann beim Aushärten bzw. Vernetzen des Bindemittelsystems, ggf. unter Mitwirkung von Katalysatoren, freigesetzt, so daß die dann frei werdenden Isocyanatgruppen mit anderen reaktiven Gruppen wie z.B. Hydroxylgruppen, Epoxigruppen, Aminogruppen oder Carboxylgruppen aus anderen Bindemittelbestandteilen reagieren können und so zum Molekulargewichtsaufbau bzw. zur Vernetzung des Bindemittelsystems beitragen.

Als Mittel zur Verbesserung des Gleitverhaltens der erfindungsgemäßen Polyurethanlack-Zusammensetzung können pulverförmige Fluorpolymere, insbesondere Polytetrafluoerethylen (PTFE) sowie Copolymere des Perfluorethylens mit anderen olefinisch ungesättigten Comonomeren die fluorhaltig sein können aber nicht sein müssen, pulverförmige Dialkylsiloxan-Polymere und/oder- Copolymere oder deren Mischungen. Bei den pulverförmigen Polydialkylsiloxanen werden vorzugsweise Polydimethylsiloxanpulver eingesetzt. Weiterhin können Emulsionen eines aminofunktionellen Polydimethylsiloxans, eines epoxifunktionellen Polydimethylsiloxans oder eines hydroxialkylfunktionellen Polydimethylsiloxans, ggf. als Mischung verschiedener Emulsionen und/oder zusammen mit den vorgenannten pulverförmigen Fluorpolymeren oder Siloxanpolymeren eingesetzt werden. Wichtig ist bei der Verwendung von Emulsionen eines Polydimethylsiloxans, dass sie mindestens eine organofunktionelle Gruppe pro Molekül einhalten, die befähigt ist, mit den reaktiven Gruppen des Bindemittels - insbesondere mit den blockierten Isocyanatgruppen-während des Trocknungsvorganges bzw. des Aushärtungsprozesses chemisch zu reagieren, so daß die Polydimethylsiloxankette in das Bindemittelsystem chemisch fest eingebunden wird und nicht migrationsfähig ist.

Netz- und Verlaufsmittel im Sinne dieser Erfindung sind alle in der Lacktechnik üblichen wichtigen Additive, hierzu gehören Netz- und Dispergiermittel, ggf. Verdickungsmittel, Entschäumer, ggf. Biozide, Filmbildehilfsmittel sowie Gleitmittel. Als Netz- und Dispergiermittel können dabei die üblichen niedermolekularen oder auch polymeren Dispergiermittel eingesetzt werden. Beispielhaft erwähnt seien anionische Tenside, nichtionische Tenside oder ggf. auch kationische Tenside. Weiterhin können die polyethermodifizierten niedermolekularen Polydimethylsiloxane als Benetzungshilfsmittel eingesetzt werden. Entschäumer reichern sich bekanntlich an der Oberfläche des flüssigen Lacks oder Lackfilms in außerordentlich dünnen Schichten an und unterdrücken dort die Bildung von Schaumblasen oder bringen bereits gebildeten Schaum zum zerfallen. Als wirkungsvolle Entschäumer können Produkte auf der Basis von natürlichen oder synthetischen Mineralölen, höheren Alkoholen, modifizierten Silikonölen oder auch Polyestem eingesezt werden. Die Verlaufsmittel sollen die Glättung der Oberfläche der Lackfilme unterstützen, hierfür können hochsiedende Lösungsmittel in geringen Mengen sowie ferner Silikonöle, die teilweise Polyester modifiziert sind und ähnliche in der Lacktechnik bekannten Hilfsmittel eingesetzt werden. Die Gesamtmenge an Netz- und Verlaufshilfsmitteln in den erfindungsgemäßen Formulierungen beträgt bis etwa 5 Gew.% bezogen auf die Gesamtzusammensetzung, vorzugsweise beträgt die Summe der diversen Netzund Verlaufshilfsmittel etwa 3 bis 4 Gew.%.

Die erfindungsgemäßen Rolyurethanlack-Zusammensetzungen können weiterhin übliche Haftvermittler, vorzugsweise auf der Basis organofunktioneller Silane enthalten, beispielhaft erwähnt seien hier die Aminoalkylalkoxisilane, 3-Glycidyloxlpropyl-trialkoxysilan oder auch Vinyltrialkoxysilan. Dabei sind die Alkoxigruppen in der Regel C1 bis C4-Alkoxygruppen.

Weiterhin können die erfindungsgemäßen Polyurethanlack-Zusammensetzungen lösliche Farbstoffe, Farbpigmente, Mattungshilfsmittel und andere übliche Hilfsstoffe enthalten. Bevorzugte Mattierungsmittel sind solche auf der Basis von Kieselsäure, ein besonders bevorzugtes schwarzes Farbpigment ist Ruß.

Da das Bindemittelsystem des erfindungsgemäßen Polyurethanlacks auf der Basis von wässrigen Dispersionen aufgebaut ist, gestaltet sich der Herstellungsprozeß sehr einfach, es werden die Polyurethandispersionen, die blockierte Polyisocyanatverbindung, die Netz- und Verlaufsmittel sowie die weiteren Hilfsmittel und das Wasser miteinander durch intensives Rühren vermischt und dann die Pigmente und das oder die Mittel zur Verbesserung des Gleitverhaltens eingerührt. Dabei kann der Ruß als Farbpigment bereits als vordispergierte Rußpaste oder Rußdispersion eingetragen werden, die Mittel zur Verbesserung des Gleitverhaltens sollen einen Teilchendurchmesser von kleiner als 10 µm, vorzugsweise 2 bis 5 µm haben, so daß eine weitere Vermahlung der pulverförmigen Bestandteile mit dem Bindemittelsystem entfallen kann.

Die vorliegende Erfindung betrifft auch die Verwendung der vorgenannten Polyurethanlacke zur Beschichtung von Elastomeren, insbesondere unpolaren Elastomeren wie Styrol-Butadien-Gummi oder Elastomeren auf der Basis von Ethylen-Propylen-Dien-Polymeren (EPDM) sowie anderen flexiblen Substraten, insbesondere Polyurethanen. Dabei weisen die derart beschichteten Elastomeren eine geringe Reibung gegenüber Glas, insbesondere in der Form von Glasscheiben auf. Dies erleichtert das Bewegen der beweglichen Glasscheiben in Fahrzeugen und vermindert im Vergleich zu unbeschichteten Elastomeren außerdem Quietschgeräusche, wie sie bei unbeschichteten Rahmen im Fahrbetrieb durch geringfügige Gleitbewegungen zwischen dem (unbeschichteten) Elastomeren und anderen Fahrzeugteilen wie den Scheiben oder der lackierten Oberfläche des Rahmens auftreten können.

In einem bevorzugten Verfahren zur Herstellung dieser beschichteten Elastomeren wird die Polyurethanlack-Zusammensetzung unmittelbar nach dem Verlassen des Ofens auf das noch heiße vulkanisierte Elastomerprofil aufgetragen, entweder durch Sprühauftrag oder durch Pinseln, dabei verdunstet das Dispersionsmittel nahezu vollständig, so daß in diesem Fall ein separater Trockungsschritt entfallen kann. Die anschließende Vernetzung des Polyurethanlackes auf dem Elastomeren kann durch Erwärmen auf Temperaturen von 50 bis 200°C, vorzugsweise auf Temperaturen von 90°C bis 180°C für 0,5 bis 15 Minuten durchgeführt werden. Dabei beträgt die Trockenfilm-Stärke des Polyurethanlackes etwa 10 bis 15 µm.

Die Erfindung soll nun anhand der nachfolgenden Ausführungsbeispiele näher erläutert werden, wobei die Auswahl der Beispiele keine Beschränkung des Umfanges des Erfindungsgegenstandes darstellt. Sofern nicht anders angeben, sind alle Mengenangaben in den nachfolgenden Beispielen Gewichts-% bzw. Gewichtsteile bezogen auf die gesamte Zusammensetzung.

### Beispiele:

Aus den nachfolgend aufgeführten Bestandteilen wurde eine Polyurethanlack-Zusammensetzung hergestellt:

| **Rohstoff** | **[%]** |
|---|---|
| PU-Dispersion, aliphatisch(Polycarbonat) (40 %ig) | 17,00 |
| PU-Dispersion, aliphatisch(Polyester) (36 %ig) | 28,00 |
| Benetzungshilfsmittel/Sulfobernsteinsäureester-Natrium-Salz | 0,50 |
| Kieselsäure/Matrierungsmittel-TS-100 | 1,50 |
| Entschäumer/Polyester-Basis | 0,10 |
| Teflon/Polytetrafluorethylen, mittlerer Teilchendurchmesser 2-5 µm | 3,00 |
| Entblasungsmittel/Gemisch-oberflächenaktiver-Polymere | 0,50 |
| Benetzungshilfsmittel/Polyethermodifiziertes-Polydimethylsiloxan | 1,00 |
| Benetzungshilfsmittel/Polydimethylsiloxan, polyethermodifiziert | 1,00 |
| Aminofunktionelles-Polydimethylsiloxan O/W-Emulsion | 2,00 |
| 1,3,5-tris[6-[[[[(1Methylpropyliden)amino]oxy]carbonyl]amino]hexyl-1,3,5-triazin-2,4,6[1H,3H,5H]-trion - Isocyanat, geblockt mit Methylethylketoxim, Dispersion | 5,00 |
| Rußpaste (25 % Ruß) in Wasser | 2,00 |
| Wasser_vollentsalzt | 38,40 |
| ***Summe*** | **100,00** |

Die Herstellung erfolgte in einem 2-Stufen-Verfahren mit der vorgeschalteten Herstellung einer Rußpaste und einem Rühransatz.

| | |
|---|---|
| Eine Rußpaste wurde aus den folgenden Bestandteilen hergestellt: Fettalkoholethoxilate | 15,00 |
| Entschäumer auf Weißöl-Basis, Netzmittel und Silikonen | 1,00 |
| Ruß | 25,00 |
| Wasser, vollentsalzt | 59,00 |

Die Bestandteile der Rußpaste wurden in einem Vorbehälter eingewogen und homogen verschmischt. Dann erfolgte das Mahlen über eine Perlmühle bis der Mahlgrad unter 50 µm lag.

### Herstellung des Lackes:

Die PU-Dispersionen wurden vorgelegt, dann folgte die Zugabe der Lack- und Benetzungshilfsmittel und es wurde ein Anteil des Wassers hinzugegeben. Anschließend wurde die Rußpaste hinzugegeben und es wurde weitere 15 Minuten gerührt und das Produkt über ein 50 µm-Filter filtriert. Danach erfolgt die Zugabe des PTFE-Pulvers, des Silikonharzes und der Silikonadditive.

Mit dem so hergestellten Polyurethanlack wurden die folgenden Prüfergebnisse erzielt:

### Prüfergebnisse

1.Viskosität 25 mPa*s
2.Dichte 20 °C 0,98 g/ml
3.Festgehalt, 30 min 130 °C, DIN 53216 28,2 %
4.Reibbeiwert 0,25
5.Glanzgrad 4,1
6.Dehnung 236 %

### Beschreibung der Prüfverfahren

### 1. Viskosität

Bestimmung der Viskosität nach Brookfield LVT, Spindel 2, 30 Upm, 25 °C (in Anlehnung an DIN 53019, Teil 1, Ausgabe Mai 1980)

### 2. Dichte

Bestimmung der Dichte in Anlehnung an DIN 51757 (Ausgabe Juni 1992) mit
einer Spindel (Aräometer) bei 20 °C in einem 250 ml-Standzylinder

### 3. Festgehalt

Bestimmung des Trockenrückstandes nach DIN 53216, 30 min in 130 °C

### 4.Reibbeiwert

Die Prüfung dient zur Beurteilung des Reibungsverhaltens einer lackierten Gummi-Oberfläche gegenüber einem anderen Reibpartner (z.B. Glas) unter festgelegten Bedingungen.
Dazu wird eine Gummiplatte mit dem Lack beschichtet (z.B. durch Sprühauftrag) und anschließend der Lackfilm getrocknet (z.B. 1 Minute 180 °C). Aus der lackierten Fläche werden 20 cm² Kreisfläche ausgestanzt. Auf dem Geräteschlitten des Gleitfähigkeitsprüfgerätes (z.B. Fa. Erichsen Modell 603) wird eine definierte Glasscheibe (vorzugsweise Einscheibensicherheitsglas) mit doppelseitigem Klebeband befestigt und mit Isopropanol gereinigt. Auf die Glasscheibe wird der Prüfling mit der lackierten Seite gelegt und mit einem Gewicht von 200 g (Andruck-Gewicht) beschwert.

Meßuhr und Gewicht werden mit einem Zugband verbunden. Der Schleppzeiger der Meßuhr wird auf "0" gestellt, der Wahlhebel für die Geschwindigkeit auf 150 mm/min gestellt und damit die Messung gestartet. Der Prüfling wird mit einer Geschwindigkeit von 150 mm/min weggezogen und die dabei auftretende Reibungskraft mit der Meßuhr und einem Schleppzeiger registriert.

Der Reibbeiwert berechnet sich aus dem Quotienten der Gleitreibungskraft und der Anlagekraft : µ = FR / FN

### 5.Glanzgrad

Die Messung des spiegelnden Glanzes erfolgt durch Vergleich mit einem Glanznormal.

Der Lack wird gut homogenisiert. Dann nimmt man ein entfettetes Stahlblech (150x70 mm) und legt es auf eine plane Unterlage. Eine kleine Menge Lackmischung wird auf das Blech gegeben und dann mittels Rakel, in einer Naßfilmdicke von 150 µm, über das Blech gezogen. Dann wird der Lack bei 180 °C 2 min getrocknet und 5 min abgekühlt. Meßkopf des kalibrierten Meßgerätes (z.B. PICO_GLOSSMASTER 60° Modell 500 der Fa. Erichsen, Hemer) auf die Probe setzen, rote Messtaste drücken und halten, bis der angezeigte Meßwert konstant ist. Die angegeben Meßwerte sind in der Betriebsart-"Glanzmessung"- die genormten Reflektorwerte nach DIN 67530, ISO 2813 und ASTM 523.

### 6. Dehnung

Der auf einem Gummistreifen befindliche getrocknete Lack wird mit einer Zugprüfmaschine gedehnt, bis die ersten Risse in der Lackschicht auftreten. Der sich durch 2 Markierungen festgelegte Abstand und durch die Dehnung verändernde Abstand wird ausgemessen und ergibt nach Umrechnung die Bruchdehnung in Prozent.

In der nachfolgenden Tabelle 2 wurde der erfindungsgemäße Polyurethanlack in seinen anwendungstechnischen Eigenschaften mit gängigen Gleitlacken des Standes der Technik verglichen. Dabei wird aus den Versuchsergebnissen deutlich, daß der erfindungsgemäße Polyurethanlack in allen anwendungstechnisch wichtigen Eigenschaften sehr gute Ergebnisse zeigt während die Gleitlacke des Standes der Technik zum Teil schlechte bis sehr schlechte Ergebnisse aufweisen.

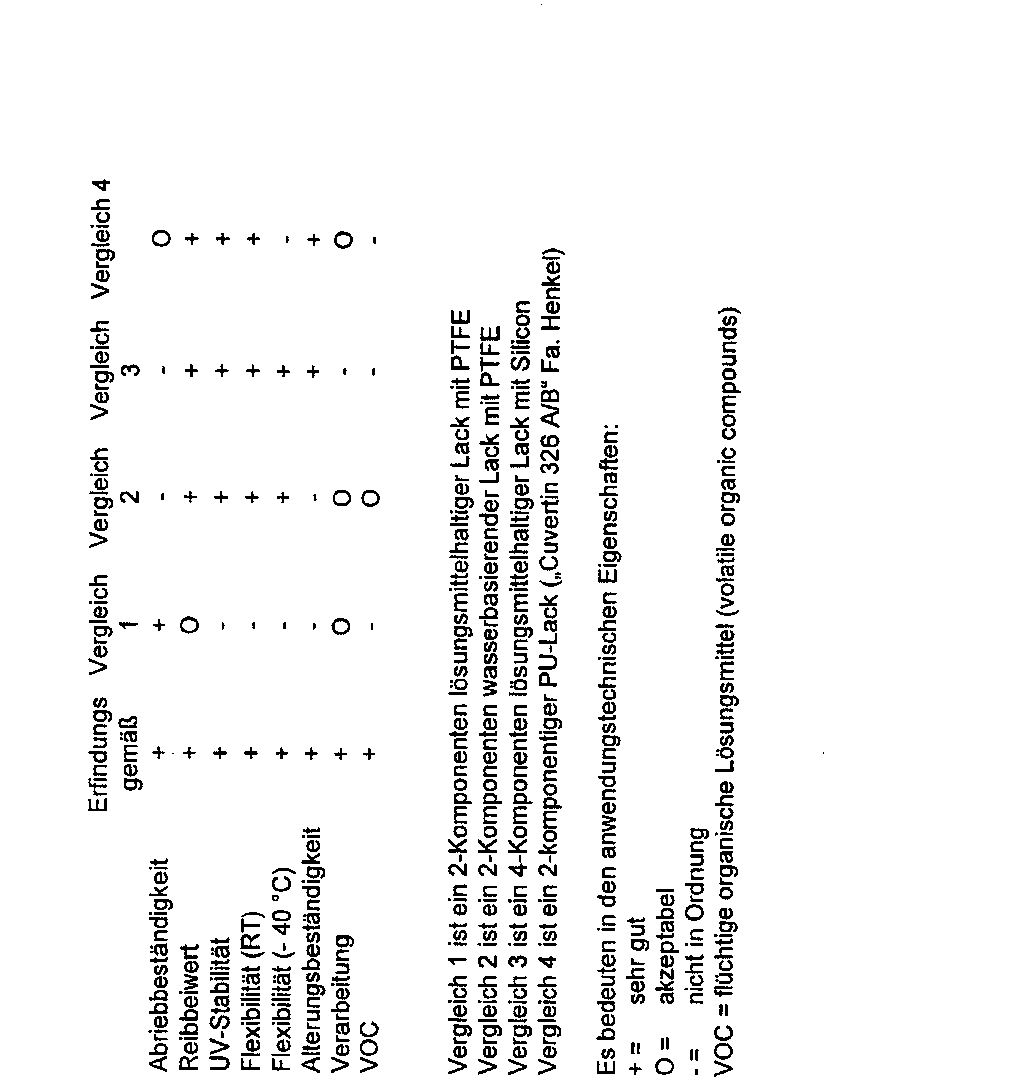

## Patentansprüche

1. Wässrige Polyurethanlack-Zusammensetzung zur Beschichtung von Elastomeren enthaltend
• mindestens eine wässrige Polyurethandispersion
• eine Verbindung mit blockierten Isocyanatgruppen
• ein Mittel zur Verbesserung des Gleitverhaltens
• mindestens ein Netz- und Verlaufsmittel
• ggf. übliche Haftvermittler
• ggf. Farbstoffe und/oder Pigmente.

2. Zusammensetzung nach Anspruch 1, **dadurch gekennzeichnet, daß** die Polyurethandispersion(en) ausgewählt werden aus aliphatischen Polyester-Urethanen und/oder aliphatischen Polycarbonat-Urethanen.

3. Zusammensetzung nach Anspruch 1 oder 2 **dadurch gekennzeichnet, daß** das Mittel zur Verbesserung des Gleitverhaltens ein Polytetrafluorethylenpulver, ein Polydialkylsiloxanpulver, Emulsion eines aminofunktionellen Polydimethylsiloxans oder deren Mischung ist.

4. Zusammensetzung nach mindestens einem der vorherigen Ansprüche **dadurch gekennzeichnet, daß** die Verbindung mit blockierten Isocyanatgruppen ausgewählt wird aus blockierten Biuretisierungs- oder Isocyanuratisierungsprodukten der folgenden cycloaliphatischen oder aliphatischen Diisocyanate: 4,4'-Dicyclohexylmethandiisocyanat (H₁₂MDI), 1-lsocyanatomethyl-3-isocyanato-1,5,5-Trimethyl-cyclohexan (Isophoron-diisocyanat, IPDI), Cyclohexan-1,4-diisocyanat, hydriertes Xylylen-diisocyanat (H₆XDI), m- oder p-Tetramethylxylendiisocyanat (m-TMXDI, p-TMXDI) und Dimerfettsäure-Diisocyanat, Hexan-1,6-diisocyanat (HDI), 1,6-Diisocyanato-2,2,4-trimethylhexan, 1,6-Diisocyanato-2,4,4-trimethylhexan, Butan-1,4-diisocyanat sowie 1,12-Dodecandiisocyanat (C₁₂DI).

5. Zusammensetzung nach Anspruch 4 **dadurch gekennzeichnet, daß** das Blockierungsmittel ausgewählt wird aus Lactamen, Aldoximen, Ketoximen, β-Dicarbonylverbindungen, Imidazolen, Hydroxamsäureestern und Phenolen.

6. Zusammensetzung nach mindestens einem der vorhergehenden Ansprüche, **dadurch gekennzeichnet, daß** die Netz- und Verlaufsmittel ausgewählt werden aus organischen Lösungsmitteln, anionischen, nicht ionischen oder kationischen Tensiden, Siloxan-copolymeren oder deren Mischungen.

7. Verwendung der Zusammensetzung nach mindestens einem der vorhergehenden Ansprüche zum Beschichten von Elastomeren zur Erzielung eines niedrigen Reibbeiwertes.

8. Verfahren zur Verbesserung der Gleitfähigkeit von Elastomeroberflächen **gekennzeichnet durch** die folgenden wesentlichen Verfahrensschritte
a) ggf. Reinigen der Elastomeroberfläche
b) ggf. Aufbringen einer Haftvermittlerschicht auf die Elastomeroberfläche
c) Beschichten der Elastomeroberfläche mit einer Zusammensetzung nach mindestens einem der Ansprüche 1 bis 6 **durch** Pinseln oder Sprühauftrag
d) Trocknen des beschichteten Elastomerteils bei Temperaturen von 50 °C bis 200 °C, vorzugsweise von 90 °C bis 180 °C für 0,5 bis 15 Minuten.

9. Verwendung der beschichteten Elastomerteile gemäß Anspruch 8 zur Abdichtung von Fensterschächten für bewegliche Glasteile und/oder als Dichtungsprofile im Automobilbau.

## Claims

1. A water-based polyurethane paint composition for coating elastomers containing
• at least one aqueous polyurethane dispersion,
• a compound containing blocked isocyanate groups,
• an agent for improving surface slip behavior,
• at least one wetting and flow control agent,
• optionally typical coupling agents and
• optionally dyes and/or pigments.

2. A composition as claimed in claim 1, **characterized in that** the polyurethane dispersion(s) is/are selected from aliphatic polyester urethanes and/or aliphatic polycarbonate urethanes.

3. A composition as claimed in claim 1 or 2, **characterized in that** the agent for improving surface slip behavior is a polytetrafluoroethylene powder, a polydialkyl siloxane powder, an emulsion of an aminofunctional polydimethyl siloxane or a mixture thereof.

4. A composition as claimed in at least one of the preceding claims, **characterized in that** the compound containing blocked isocyanate groups is selected from blocked biuretization or isocyanuratization products of the following cycloaliphatic or aliphatic diisocyanates: 4,4'-dicyclohexylmethane diisocyanate (H₁₂MDI), 1-isocyanatomethyl-3-isocyanato-1,5,5-trimethyl cyclohexane (isophorone diisocyanate, IPDI), cyclohexane-1,4-diisocyanate, hydrogenated xylylene diisocyanate (H₆XDI), m- or p-tetramethyl xylene diisocyanate (m-TMXDI, p-TMXDI), dimer fatty acid diisocyanate, hexane-1,6-diisocyanate (HDI), 1,6-diisocyanato-2,2,4-trimethylhexane, 1,6-diisocyanato-2,4,4-trimethyl hexane, butane-1,4-diisocyanate and 1,12-dodecane diisocyanate (C₁₂DI).

5. A composition as claimed in claim 4, **characterized in that** the blocking agent is selected from lactams, aldoximes, ketoximes, β-dicarbonyl compounds, imidazoles, hydroxamic acid esters and phenols.

6. A composition as claimed in at least one of the preceding claims, **characterized in that** the wetting and flow control agents are selected from organic solvents, anionic, nonionic or cationic surfactants, siloxane copolymers or mixtures thereof.

7. The use of the composition claimed in at least one of the preceding claims for coating elastomers to obtain a low friction coefficient.

8. A process for improving the surface slip behavior of elastomer surfaces, **characterized in that** it comprises the following key steps:
a) optionally cleaning the elastomer surface,
b) optionally applying a layer of coupling agent to the elastomer surface,
c) coating the elastomer surface with the composition claimed in at least one of claims 1 to 6 by brushing or spraying,
d) drying the coated elastomer profile for 0.5 to 15 minutes at temperatures of 50°C to 200°C and preferably at temperatures of 90°C to 180°C.

9. The use of the elastomer profiles coated by the process claimed in claim 8 for sealing window channels for moving glass parts and/or as sealing profiles in car manufacture.

## Revendications

1. Composition aqueuse de laque de polyuréthane destinée à revêtir des élastomères contenant
• au moins une dispersion aqueuse de polyuréthane
• un composé avec des groupes isocyanates bloqués
• un agent pour améliorer le comportement de glissement
• au moins un agent mouillant et d'étalement
• éventuellement des agents adhésifs usuels
• éventuellement des colorants et/ou pigments.

2. Composition selon la revendication 1, **caractérisée en ce que** la ou les dispersions de polyuréthane sont choisies parmi les polyester-uréthanes aliphatiques et/ou les polycarbonate-uréthanes aliphatiques.

3. Composition selon la revendication 1 ou 2, **caractérisée en ce que** l'agent pour améliorer le comportement de glissement est une poudre de polytétrafluoroéthylène, une poudre de polydialkylsiloxane, une émulsion d'un polydiméthylsiloxane à fonction amino, ou leur mélange.

4. Composition selon au moins l'une des revendications précédentes, **caractérisée en ce que** le composé avec des groupes isocyanate bloqués est choisi parmi les produits de biurétisation ou d'isocyanuratisation bloqués des diisocyanates cycloaliphatiques ou aliphatiques suivants :
le 4,4'-dicyclohexylméthane-diisocyanat (H₁₂MDI), le 1-isocyanatométhyl-3-isocyanato-1,5,5-triméthyl-cyclohexane (diisocyanate d'isophorone, IPDI), le cyclohexane-1,4-diisocyanate, le xylylène-diisocyanate hydrogéné (H₆XDI), le m- ou p-tétmméthylxylène-diisocyanate (m-TMXDI, p-TMXDI) et un diisocyanate d'acide gras dimère, l'hexane-1,6-diisocyanate (HDI), le 1,6-diisocyanato-2,2,4-triméthylhexane, le 1,6-diisocyanato-2,4,4-triméthylhexane, le butane-1,4-diisocyanate ainsi que le 1,12-dodécane-diisocyanate (C₁₂DI).

5. Composition selon la revendication 4, **caractérisée en ce que** l'agent de blocage est choisi parmi les lactames, les aldoximes, les cétoximes, les composés β-dicarbonyle, les imidazoles, les esters d'acide hydroxamique, et les phénols.

6. Composition selon au moins l'une des revendications précédentes, **caractérisée en ce que** les agents mouillants et d'étalement sont choisis parmi les solvants organiques, les tensio-actifs anioniques, non ioniques ou cationiques, les copolymères de siloxane ou leurs mélanges.

7. Utilisation de la composition selon au moins l'une quelconque des revendications précédentes pour revêtir des élastomères en vue d'obtenir un faible coefficient de frottement.

8. Procédé en vue d'améliorer l'aptitude au glissement de surfaces d'élastomère, **caractérisée par** les étapes essentielles de procédé suivantes
a) éventuellement un nettoyage de la surface d'élastomère
b) éventuellement l'application d'une couche d'agent adhésif sur la surface d'élastomère
c) revêtement de la surface d'élastomère par une composition selon au moins l'une des revendications 1 à 6 au moyen d'une application au pinceau ou par pulvérisation
d) séchage de la partie d'élastomère revêtue à des températures de 50°C à 200°C, de préférence de 90°C à 180°C pendant 0,5 à 15 minutes.

9. Utilisation des pièces d'élastomère revêtues, selon la revendication 8, pour rendre étanches les gaines de vitrage destinées à des pièces mobiles en verre et/ou sous la forme de profilés d'étanchéité dans la construction automobile.
